# EUROPEAN PATENT SPECIFICATION

(11) **EP 3 143 880 B1**
(45) Date of publication and mention of the grant of the patent: **19.12.2018**
(21) Application number: 16189356.5
(22) Date of filing: 16.09.2016
(51) Int. Cl.: A23D 9/013, A23D 9/04, A23D 7/00

(54) **METHOD FOR OBTAINING SOLID FAT WITH LOW SATURATED FATTY ACID CONTENT**
VERFAHREN ZUR HERSTELLUNG VON FESTEM FETT MIT NIEDRIGEM GESÄTTIGTEM FETTSÄUREGEHALT
PROCÉDÉ D'OBTENTION DE GRAISSE SOLIDE À FAIBLE TENEUR EN ACIDES GRAS SATURÉS

(30) Priority: 18.09.2015 ES 201531336
(43) Date of publication of application: 22.03.2017
(73) Proprietor: Aceites del Sur-Coosur, S.A., 23220 Vilches, Jaén (ES)
(72) Inventor: Gómez Rodríguez, Pablo, 23220 Vilches, Jaén (ES); García Sánchez, Andrés, 23220 Vilches, Jaén (ES); Jiménez López, Jesús, 23220 Vilches, Jaén (ES)
(74) Representative: Escudero Prieto, Nicolás Enrique

(56) References cited:
- EP-A1- 2 060 187
- WO-A1-98/19554
- WO-A1-2014/109313
- ES-A1- 2 306 612
- JP-A- S57 180 496
- US-A1- 2002 132 035
- US-A1- 2005 142 275
- US-A1- 2008 199 582
- US-B1- 6 346 289

## Description

### TECHNICAL FIELD

The present invention can be comprised within the food and human health sector. More specifically, the present invention relates to a method for producing or obtaining healthy fats characterized by being solid at room temperature and by having a high percentage of monounsaturated fatty acids/polyunsaturated fatty acids (MUFAs/PUFAs) and a low percentage of saturated fatty acids (SFAs). Furthermore, *trans* fatty acids are not generated while implementing the method of the invention.

### PRIOR ART

Saturated fats (characterized by not having double bonds) are fundamentally found in foods that come from animals, such as meats, sausages, milk and milk products (cheese, ice-cream, etc.). They can also be found in vegetable oils, such as coconut or palm oils (which are consumed through mass-produced baked goods, salty snack foods and processed products). These are fats that solidify at room temperature. The consumption of saturated fats favors an increase in blood cholesterol levels, with LDL cholesterol (bad cholesterol) being one of the main risk factors for heart diseases.

Unsaturated fats (characterized by having double bonds) are mostly found in foods that come from plants, such as vegetable oils (olive, sunflower or corn oil). They can also be found in dried nuts and fruits and in seeds such as sesame seeds, sunflower seeds or linseeds. Although coconut or palm oils are vegetable oils, they contain SFAs, instead of UFAs, as the main fatty acids. These are fats that are liquid at room temperature. According to the number of double bonds they have, they are classified as monounsaturated or polyunsaturated. Substituting saturated fats with unsaturated fats in the diet helps to maintain normal blood cholesterol levels which are essential for regulating metabolic processes of the cardiovascular, immune and pulmonary systems, among others.
*Trans* fatty acids (TFAs) are a type of unsaturated fatty acid that are mainly found in processed foods. *Trans* fatty acids are conventionally formed in the hydrogenation process performed on fats for the purpose of solidifying them for later use in different foods. An example of this is the solidification of liquid vegetable oil to manufacture margarine. In fact, if a fat is liquid at room temperature, it is mostly made up of UFAs generally in *cis* form [Ghotra, B. S., Dyal, S. D., Narine, S. S. (2002). "Lipid shortenings: a review", Food Research International 35, 1015 -1048*].*

Not only do *trans* fatty acids increase the concentration of low density lipoproteins (LDLs) in the blood, but they also reduce high density lipoproteins (HDLs, which are referred to in layman's terms as "good cholesterol"), giving rise to a higher risk of suffering cardiovascular diseases [Cindio B., Lupi F. R., (2011), Part 2, Chap. 15-"Saturated fat reduction in pastry" in Talbot G., "Reducing saturated fats in foods", Woodhead Publishing Limited (Great Abington, Cambridge, UK), pp. 301-317*].*

Accordingly, the search for alternative techniques for preparing solid fats at room temperature with a low SFA content and a method for obtaining such fats that does not generate *trans* fatty acids is a prime objective.

Among the alternative processes proposed in the prior art to avoid producing *trans* isomers is the interesterification of vegetable oils and saturated fats [Criado, M., Hernández-Martín, E., López-Hernández, A., Otero, C. (2007). "Enzymatic interesterification of extra virgin olive oil with a fully hydrogenated fat: characterization of the reaction and its products". Journal of American Oil Chemists Society 8, 717 - 26]. Interesterification is the process of rearranging (randomly or in a directed manner) the acyl groups in one and the same triacylglycerol or between molecules of different triacylglycerols. The process can be carried out chemically or enzymatically, according to whether chemical catalysts (metallic sodium, sodium alkoxides) or enzymes (lipases) are used. Even though it was initially thought that interesterified fats or oils would be a healthy alternative to using *trans* fats in the food industry, it has been shown that they are similarly harmful, since they increase glucose levels (blood sugar) and reduce the presence of good cholesterol or HDL. Furthermore, they have not been proven and approved by the FDA.

Another alternative to producing *trans* fatty acids is to add saturated fats in the oil in liquid phase with an emulsifier and a stabilizer for the purpose of increasing the hardness of the end fat [Jahaniaval, F. (2005). "Process for preparing high liquid oil, no trans, very low saturates, regular margarine with phospholipids*",* US patent application 2005/0233056 A1, *with international classification A23D007*/*00].* However, the use of water in the manufacturing processes can involve some technical issues.

Furthermore, research has been conducted in recent years on a new line of sunflower called high stearic/high oleic sunflower oil, or water/oil emulsions have been developed from vegetable proteins or mono- and diglycerides as binders, among others. However, in the case of high stearic/high oleic oil, it can be seen that they are not able to achieve a really low level of SFAs and a high melting point of the end fat. In turn, water/oil emulsions have the drawback of not being pure fat, but rather a certain amount of water is introduced, with the technological issues that this may involve in some manufacturing processes.

Finally processes using crystallizing agents containing saturated fatty acids for the solidification of triglycerides are known in the prior art, see for example WO98/19554 or ES2306612.

Therefore, after studying the prior art, a clear need for finding a process for producing or obtaining solid fats at room temperature with a high content of any oil (preferably vegetable oil) with a high percentage of MUFAs/PUFAs and a low percentage of SFAs has been identified. Furthermore, it is important that *trans* fatty acids are not generated while implementing the process for producing the fat.

As will be explained below in the disclosure of the invention, the present invention solves said technical problem by means of applying a process known as crystallization, using as a crystallizing agent a composition that is precisely defined below.

### DISCLOSURE OF THE INVENTION

The objective of the present invention is a method for obtaining solid fat at room temperature having a high percentage of MUFAs/PUFAs and a low percentage of SFAs. Furthermore, the method of the invention is characterized by not generating *trans* fatty acids. The method generally comprises crystallizing the triglycerides of the oils to be solidified by means of using a crystallizing agent comprising a mixture of completely hydrogenated vegetable triglycerides. When the triglycerides of the crystallizing agent transition from a liquid to solid state, they act like crystallization initiating nuclei, and the triglycerides of the oils to be solidified located in the surrounding areas accordingly start to gather around same. This causes the oil to solidify without any chemical modification thereof (as occurs with hydrogenation for example), i.e., without generating *trans* fats, achieving a final solid fat at room temperature with a high MUFA or PUFA content, and a low SFA content that is characteristic of most vegetable oils.

In the present invention, room temperature is understood as those temperatures lower than body temperature (37°C).
Furthermore, in the present invention it is understood that there is a low SFA content when the percentage of SFAs in the final mixture is equal to or less than 35%.
The composition of the fat obtained is generally shown in Table 1.

**Table 1**

| | Composition (w/w%) |
|---|---|
| Vegetable and/or animal oil | 69-92 |
| Crystallizing agent | 8-25 |
| Mono-and diglycerides | 0-6 |

Therefore, the first aspect of the present invention relates to the crystallizing agent to be used to produce fat characterized by being solid at room temperature and comprising a percentage of saturated fatty acid content in the final mixture of said fat equal to or less than 35%, characterized in that it comprises, in decreasing order, stearic acid, palmitic acid, behenic acid and arachidic in the following percentages: 45-50% stearic acid, 25-30% palmitic acid, 14-19% behenic acid and 2-4% arachidic acid. In a preferred aspect of the invention, the
crystallizing agent is characterized in that it comprises the following percentages of fatty acids in decreasing order: stearic acid 47.93%, palmitic acid 29.66%, behenic acid 17.40% and arachidic acid 3.85%. In another preferred aspect of the invention, the crystallizing agent is characterized by having the following as the main triglycerides: 50.7% PSS, 32.8% SSS, 8.22% BSS and 4.7% PPP. In another preferred aspect of the invention, the crystallizing agent is characterized by having the following, in decreasing order, as the main triglycerides: PSS, SSS, BSS and PPP (P= palmitic, S= stearic, B= behenic). The crystallizing agent is the key element of the invention as it is required for achieving crystallization and, hence, solidification of the oil added at room temperature.

The higher the amount of crystallizing agent, the harder the end fat and the higher the melting point will be.

The second aspect of the invention relates to a method for obtaining solid fat at room temperature with a low percentage of SFAs, characterized in that it comprises: a) heating a mixture comprising the crystallizing agent defined above with the oil to be solidified to 65-80°C, wherein said mixture comprises a percentage of saturated fatty acid content in the final mixture of said fat equal to or less than 35%, b) cooling the mixture to 30-45°C with simultaneous vigorous stirring and c) packaging and letting stand at 0-4°C or at room temperature for at least 24 hours. In a preferred aspect, the method of the invention is characterized by not generating *trans* fatty acids. In another preferred aspect, the method of the invention is characterized in that the mixture of step a) further comprises 0-6% of fatty acid mono-and diglycerides.
In a preferred aspect of the invention, the method is characterized in that the oil to be solidified is a vegetable oil, animal oil or a mixture of vegetable oil and animal oil. In another preferred aspect of the invention, the method is characterized in that the mixture of step a) comprises about 69-92% of the oil to be solidified and about 8-25% of crystallizing agent.
In another preferred aspect of the invention, the method is characterized in that the solid fat obtained comprises about 65-85% of UFAs and about 15-35% of SFAs.

Therefore, the resulting product is a vegetable fat, animal fat or a mixture of both (depending on the origin of the oil to be solidified) with melting points above 37°C and the physicochemical composition characteristics of which will depend on the percentages of the crystallizing agent and on the oil to be crystallized used in the mixture of step a) described above, as well as the nature of the oil. In a preferred embodiment, the oil to be solidified is a vegetable oil, for example: olive oil, sunflower oil, corn oil, soybean oil, palm oil, grapeseed oil, hemp oil, nut oil, etc. Nevertheless, this process is also valid for being used with other oils and fats that do not come from plants, such as fish oil or pig lard. The characteristics of the crystals formed are affected both by the types of oil used and by work conditions. A quicker mixture cooling process favors generating a larger amount of crystals but they are smaller in size due to the shorter time the triglycerides have to gather into crystals, as well as to more vigorous stirring. In contrast, longer cooling processes and gentler stirring generate a lower number of crystals but they are larger in size, so unwanted fats having a grainy consistency are generated. Finally, it is important to note that the method of the invention does not comprise any step in which the fat finally obtained is emulsified nor is there any presence of water.
Given that it is possible to obtain fats with sufficient consistency and hardness with concentrations starting from 8% of crystallizing agent, the method of the invention allows almost the only component to be the oil to be solidified. The result, especially when using healthy oils such as olive oil, sunflower oil, soybean oil or the like is that the lipid profile, and therefore the nutritional characteristics, will be very similar to those of the starting oil or oils used.

The third aspect of the invention relates to a solid fat at room temperature comprising a percentage of saturated fatty acid content in the final mixture of said fat equal to or less than 35%, said fat being obtained through the method described above. In a preferred aspect of the invention, the obtained fat is characterized in that it comprises about 69-92% of the solidified oil and about 8-25% of the crystallizing agent defined above. The entire mixture resulting from the oil to be solidified with the crystallizing agent after the preparation process shows a lipid profile that coincides with percentage of components used. In another preferred aspect of the invention, the fat is characterized in that the solidified oil comprises about 65-85% of UFAs and about 15-35% of SFAs.

In another preferred aspect of the invention, the solid fat at room temperature with a low percentage of SFAs is characterized in that the solidified oil is a vegetable oil, animal oil or a mixture of vegetable oil and animal oil. In fact, any oil or fat from an animal or plant, as well as the mixture of both, can be used in the solidification process for obtaining a solid fat. This makes the process obviously versatile since it allows obtaining fats with different nutritional and technological characteristics depending on the type and the origin of the oil used.

The final aspect of the invention relates to the use of the crystallizing agent defined above for producing the fat specified above.

### DETAILED DISCLOSURE OF THE INVENTION

The purpose of the examples provided below is to illustrate preferred embodiments of the invention and they must not be considered as limiting the scope thereof. Therefore, the examples described below must be taken into account as mere proof of concept that teach particular ways of carrying out the claimed invention.

### Example 1. Different formulations obtained with the method of the invention:

The formulations (A, B C, D) with a higher percentage of crystallizing agent have higher melting points. The formulations with higher percentages of mono- and diglycerides are harder and have a higher solids content at a low temperature (Table 2).

**Table 2**

| | Example A (w/w%) | Example B (w/w%) | Example C (w/w%) | Example D (w/w%) |
|---|---|---|---|---|
| Vegetable and/or animal oil | 88.5 | 89 | 80 | 77 |
| Crystallizing agent | 11.5 | 10 | 20 | 18 |
| Mono-and diglycerides | | 1 | | 5 |

### Example 2. Composition acting as the crystallizing agent:

The composition acting as the crystallizing agent was obtained by means of mixing completely hydrogenated triglycerides from palm and rape seed. The crystallizing agent is characterized by being made up entirely of SFAs, including among such SFAs stearic acid, palmitic acid, behenic acid and arachidic acid.

The crystallizing agent used in this example has a melting point of 59°C and is characterized in that it comprises the following percentages of fatty acids: 47.93% stearic acid, 29.66% palmitic acid, 17.40% behenic acid and 3.85% arachidic acid.

### Example 3. Physicochemical characterization of the fat obtained by the method of the invention:

In this example, a fat with the following percentages of crystallizing agent and refined olive oil was produced: 11.5% crystallizing agent and 88.5% refined olive oil to be solidified, obtaining the mixtures (A, B, C) shown in Table 3 with a reduced percentage of SFAs.

**Table 3**

| | Mixture A with olive oil | Mixture B with sunflower oil | Mixture C with sunflower oil |
|---|---|---|---|
| Melting point (°C) | 42.9 | 40.8 | 54 |

| Fatty acid profile (%) | | | |
|---|---|---|---|
| Myristic acid (C14:0) | 0.05-0.08 | 0.08-0.12 | 0.08-0.13 |
| Palmitic acid (C16:0) | 12-16.5 | 8-12 | 11-15 |
| Palmitoleic acid (C16:1) | 0.8-1.2 | 0.08-0.11 | 0.06-0.09 |
| Stearic acid (C18:0) | 6-10 | 7-9 | 14.5-18 |
| Oleic acid (C18:1) | 50-70 | 20-25 | 18-23 |
| Linoleic acid (C18:2) | 5-8 | 52-59 | 47-52 |
| Linolenic acid (C18:3) | 0-0.8 | 0-0.4 | 0-0.3 |
| Arachidic acid (C20:0) | 0.6-0.8 | 0.5-0.8 | 0.7-1.1 |
| Behenic acid (C22:0) | 1-3 | 1.8-2.4 | 3-4.2 |
| Total SFA | 21-27.5 | 17.5-22 | 28.5-35 |
| Total MUFA | 51.3-68 | 20-25.5 | 18-23.5 |
| Total PUFA | 6-10 | 52-60 | 47-53 |

## Claims

1. A crystallizing agent to be used to produce fat **characterized by** being solid at room temperature and comprising a percentage of saturated fatty acid content in the final mixture of said fat equal to or less than 35%, **characterized in that** said crystallizing agent comprises the following percentages of fatty acids: 45-50% stearic acid, 25-30% palmitic acid, 14-19% behenic acid and 2-4% arachidic acid.

2. The crystallizing agent according to claim 1, **characterized in that** its fatty acid composition is a composition obtained from a mixture of hydrogenated triglycerides from palm and rape seed.

3. A method for obtaining solid fat at room temperature, **characterized in that** it comprises:
a. heating a mixture comprising the crystallizing agent of any of claims 1-2 with an oil to 65-80°C, wherein said mixture comprises a percentage of saturated fatty acid content in the final mixture equal to or less than 35%;
b. cooling the mixture to 30-45°C with simultaneous vigorous stirring;
c. packaging and letting stand at 0-4°C or at room temperature for at least 24 hours.

4. The method according to claim 3, **characterized by** not generating *trans* fatty acids.

5. The method according to claim 3, where the oil is a vegetable oil, animal oil or a mixture of vegetable oil and animal oil.

6. The method according to claim 3, where the mixture comprises about 69-92% of the oil.

7. The method according to claim 3, where the mixture comprises about 8-25% of crystallizing agent.

8. The method according to claim 3, where the mixture of step a) further comprises 0-6% of fatty acid mono- and diglycerides.

9. The method according to claim 3, where the solid fat obtained comprises about 65-85% of unsaturated fatty acids and about 15-35% of saturated fatty acids.

10. A solid fat at room temperature comprising a percentage of saturated fatty acid content in the final mixture of said fat equal to or less than 35%, **characterized in that** it is obtained by means of the method of claims 3 to 9.

11. The fat according to claim 10, comprising about 69-92% of the oil and about 8-25% of the crystallizing agent.

12. The fat according to claim 10, where the oil comprises about 65-85% of unsaturated fatty acids and about 15-35% of saturated fatty acids.

13. The fat according to claim 10, where the oil is a vegetable oil, animal oil or a mixture of vegetable oil and animal oil.

14. Use of the crystallizing agent according to any of claims 1-3 for producing the fat according to any of claims 10 to 13.

## Patentansprüche

1. Kristallisationsmittel für dessen Verwendung bei der Herstellung von Fett, **dadurch gekennzeichnet, dass** es bei Raumtemperatur fest ist und dass es einen Anteil an gesättigtem Fettsäuregehalt in der endgültigen Mischung des genannten Fetts gleich oder kleiner als 35% umfasst, **dadurch gekennzeichnet, dass** das genannte Kristallisationsmittel die folgenden Anteile an Fettsäuren umfasst: 45-50% Stearinsäure, 25-30% Palmitinsäure, 14-19% Behensäure und 2-4% Arachinsäure.

2. Kristallisationsmittel nach Anspruch 1, **dadurch gekennzeichnet, dass** dessen Fettsäurezusammensetzung eine aus einer Mischung von hydrierten Triglyceriden aus Palmkern und Rapssamen erhaltene Zusammensetzung ist.

3. Verfahren zur Herstellung von festem Fett bei Raumtemperatur, **dadurch gekennzeichnet, dass** es Folgendes umfasst:
a. das Erhitzen einer Mischung umfassend das Kristallisationsmittel nach einem der Ansprüche 1-2 mit einem Öl auf 65-80°C, wobei die genannte Mischung einen Anteil an gesättigtem Fettsäuregehalt in der endgültigen Mischung gleich oder kleiner als 35% umfasst;
b. das Kühlen der Mischung auf 30-45°C mit gleichzeitigem starken Rühren;
c. das Verpacken und Stehenlassen bei 0-4°C oder bei Raumtemperatur mindestens 24 Stunden lang.

4. Verfahren nach Anspruch 3, **dadurch gekennzeichnet, dass** es keine trans-Fettsäuren erzeugt.

5. Verfahren nach Anspruch 3, wobei das Öl ein pflanzliches Öl, ein tierisches Öl oder eine Mischung von pflanzlichem Öl und tierischem Öl ist.

6. Verfahren nach Anspruch 3, wobei die Mischung etwa 69-92% Öl umfasst.

7. Verfahren nach Anspruch 3, wobei die Mischung etwa 8-25% Kristallisationsmittel umfasst.

8. Verfahren nach Anspruch 3, wobei die Mischung aus Schritt a) zusätzlich 0-6% Fettsäuremono- und -diglyceride umfasst.

9. Verfahren nach Anspruch 3, wobei das erhaltene feste Fett etwa 65-85% ungesättigter Fettsäuren und etwa 15-35% gesättigter Fettsäuren umfasst.

10. Festes Fett bei Raumtemperatur umfassend einen Anteil an gesättigtem Fettsäuregehalt in der endgültigen Mischung des genannten Fetts gleich oder kleiner als 35%, **dadurch gekennzeichnet, dass** es mittels des Verfahrens nach den Ansprüchen 3 bis 9 erhalten wird.

11. Fett nach Anspruch 10, welches etwa 69-92% Öl und etwa 8-25% Kristallisationsmittel umfasst.

12. Fett nach Anspruch 10, wobei das Öl etwa 65-85% ungesättigter Fettsäuren und etwa 15-35% gesättigter Fettsäuren umfasst.

13. Fett nach Anspruch 10, wobei das Öl ein pflanzliches Öl, ein tierisches Öl oder eine Mischung aus pflanzlichem Öl und tierischem Öl ist.

14. Verwendung des Kristallisationsmittels nach einem der Ansprüche 1-3 zur Herstellung des Fetts nach einem der Ansprüche 10 bis 13.

## Revendications

1. Agent de cristallisation à utiliser pour produire de la matière grasse **caractérisé par** le fait d'être solide à température ambiante et comprenant un pourcentage de teneur en acides gras saturés dans le mélange final de ladite matière grasse inférieur ou égal à 35%, **caractérisé en ce que** ledit agent de cristallisation comprend les pourcentages suivants d'acides gras : 45-50% d'acide stéarique, 25-30% d'acide palmitique, 14-19% d'acide béhénique et 2-4% d'acide arachidique.

2. Agent de cristallisation selon la revendication 1, **caractérisé en ce que** sa composition d'acides gras est une composition obtenue à partir d'un mélange de triglycérides de graines de palme, de graines de colza.

3. Procédé d'obtention de ladite matière grasse à température ambiante, **caractérisé en ce qu'**il comprend :
a) le réchauffement d'un mélange comprenant l'agent de cristallisation de l'une quelconque des revendication 1-2 avec une huile à 65-80°C, dans lequel ledit mélange comprend un pourcentage de teneur en acides gras saturés dans le mélange final inférieur ou égal à 35%,
b) le refroidissement du mélange à 30-45°C avec brassage vigoureux simultané,
c) l'emballage et la mise en repos à 0,4°C ou à température ambiante pendant au moins 24 heures.

4. Procédé selon la revendication 3, **caractérisé en ce qu'**il ne génère pas d'acides gras *trans.*

5. Procédé selon la revendication 3, dans lequel l'huile est une huile végétale, une huile animale ou un mélange d'huile végétale et d'huile animale.

6. Procédé selon la revendication 3, dans lequel le mélange comprend approximativement 69-92% de l'huile.

7. Procédé selon la revendication 3, dans lequel le mélange comprend approximativement 8-25% de l'agent de cristallisation.

8. Procédé selon la revendication 3, dans lequel le mélange de l'étape a) comprend en outre l'utilisation de 0-6% de mono- et diglycérides d'acides gras.

9. Procédé selon la revendication 3, dans lequel la matière grasse solide comprend approximativement 65-85% d'acides gras non-saturés et approximativement 15-35% d'acides gras saturés.

10. Matière grasse solide à température ambiante comprenant un pourcentage de teneur en acides gras saturés dans le mélange final de ladite matière grasse inférieur ou égal à 35%, **caractérisé en ce qu'**elle est obtenue par le biais du procédé des revendications 3 à 9.

11. Matière grasse selon la revendication 10, comprenant approximativement 69-92% de l'huile et approximativement 8-25% de l'agent de cristallisation.

12. Matière grasse selon la revendication 10, dans laquelle l'huile comprend approximativement 65-85% d'acides gras non-saturés et approximativement 15-35% d'acides gras saturés.

13. Matière grasse selon la revendication 10, dans lequel l'huile est une huile végétale, une huile animale ou un mélange d'huile végétale et d'huile animale.

14. Utilisation de l'agent de cristallisation selon l'une quelconque des revendications 1-3 pour produire la matière grasse selon l'une quelconque des revendications 10 à 13.
